# EUROPÄISCHE PATENTSCHRIFT

(11) **EP 3 301 311 B1**
(45) Veröffentlichungstag und Bekanntmachung des Hinweises auf die Patenterteilung: **12.06.2019**
(21) Anmeldenummer: 17191005.2
(22) Anmeldetag: 14.09.2017
(51) Int. Cl.: F16B 7/18

(54) **KUPPLUNG**
COUPLING
COUPLAGE

(30) Priorität: 15.09.2016 DE 102016217622
(43) Veröffentlichungstag der Anmeldung: 04.04.2018
(73) Patentinhaber: PERI GMBH, 89264 Weissenhorn (DE)
(72) Erfinder: Sturm, Florian, 89299 Unterroth (DE)
(74) Vertreter: Kohler Schmid Möbus Patentanwälte

(56) Entgegenhaltungen:
- DE-U1-202005 002 790
- DE-U1-202013 007 976
- US-A- 856 200
- US-A1- 2016 121 929

## Beschreibung

Die Erfindung betrifft eine Kupplung zur Verbindung eines ersten Doppelprofilträgers mit einem zweiten Doppelprofilträger bzw. zur Anbindung zumindest eines weiteren Anbauteils. Die Erfindung betrifft weiterhin eine Trägeranordnung mit einer solchen Kupplung sowie ein Profilelement einer solchen Kupplung.

Es ist bekannt, einen ersten Doppelprofilträger, beispielsweise in Form zweier parallel verlaufender U-Profilträger, in Form eines parallel zu einem U-Profilträger verlaufenden I-Profilträgers oder in Form zweier parallel verlaufender L-Profilträger mit einem zweiten Doppelprofilträger zu verbinden. Hierzu werden Kupplungen eingesetzt, die in Form einer Schweißkonstruktion aus U-Profilen, in Form eines im Querschnitt rechteckförmigen Hohlprofils oder einer Schweißkonstruktion aus Blechen ausgebildet sind. Bei diesen Kupplungen können Schweißnähte, Überstände und ungünstige Toleranzen stören. Weiterhin sind die bekannten Kupplungen nicht zur Anbindung eines weiteren Anbauteils durch eine Schraubverbindung senkrecht zur Längsachse der Kupplungen geeignet. Insbesondere sind die Innenflächen der bekannten Kupplungen nicht vollständig durch ein Pulverbeschichtungsverfahren versiegelbar, da die umfangsmäßig zumindest weitgehend geschlossenen Formen der bekannten Kupplungen in der Art eines Faraday-Käfigs wirken und die Ablagerung geladener Pulverteilchen verhindern.

Das Dokument US 2016/0121929 A zeigt ein Verbindungselement für Profilträger.

Aufgabe der vorliegenden Erfindung ist es daher, eine Kupplung bereit zu stellen, die die vorgenannten Nachteile überwindet. Insbesondere ist es die Aufgabe der vorliegenden Erfindung, eine mechanisch zuverlässige Kupplung bereit zu stellen, die leicht pulverbeschichtbar ist. Aufgabe der vorliegenden Erfindung ist es weiterhin, eine Trägeranordnung mit einer solchen Kupplung sowie ein Profilelement einer solchen Kupplung bereit zu stellen.

Diese Aufgabe wird durch eine Kupplung mit den Merkmalen des Anspruchs 1 sowie durch eine Trägeranordnung mit den Merkmalen des Anspruchs 12 und einem Profilelement mit den Merkmalen des Anspruchs 13 gelöst. Die Unteransprüche geben zweckmäßige Weiterbildungen an.

Die erfindungsgemäße Aufgabe wird somit durch eine Kupplung gelöst, durch die ein erster Doppelprofilträger mit einem zweiten Doppelprofilträger verbindbar ist. Alternativ oder zusätzlich dazu kann die Kupplung die Anbindung zumindest eines weiteren Anbauteils an den ersten Doppelprofilträger ermöglichen. Unter einem Doppelprofilträger wird dabei eine Anordnung aus zumindest zwei sich parallel erstreckenden Trägern verstanden, die jeweils ein Profil mit im Wesentlichen gleich bleibendem Querschnitt aufweisen. Die beiden Doppelprofilträger können durch sich axial erstreckende Verbinder, beispielsweise in Form von Schraubverbindern oder Steckbolzen, an ersten Durchgangsausnehmungen des ersten Profilelements befestigt werden. Die Kupplung weist ein erstes Profilelement und ein zweites Profilelement auf, wobei die beiden Profilelemente zumindest teilweise, insbesondere über ihre gesamte gegenseitige Kontaktfläche, formschlüssig verbindbar sind. Die beiden Profilelemente können hierdurch getrennt voneinander pulverbeschichtet werden. Erfindungsgemäß ist es somit gelungen, eine Kupplung zu schaffen, die weder deutlich Festigkeit gegenüber den Kupplungen aus dem Stand der Technik einbüßt noch signifikant mehr Gewicht aufweist oder schwerer zu montieren ist als die bekannten Kupplungen und dennoch leicht pulverbeschichtbar ist.

Die Kupplung ist vorzugsweise parallel zur Längsachse der Kupplung teilbar. Die Teilbarkeit der Kupplung ist dabei durch das erste Profilelement und das formschlüssig mit dem ersten Profilelement verbindbare zweite Profilelement realisiert.

Besonders bevorzugt ist das erste Profilelement reversibel lösbar über den Formschluss mit dem zweiten Profilelement verbindbar.

Die Verbindung des ersten Profilelements mit dem zweiten Profilelement erfolgt vorzugsweise auf besonders sichere Art und Weise durch formschlüssige Hinterschneidungen.

Dabei ist das erste Profilelement bevorzugt durch eine Schwalbenschwanzverbindung mit dem zweiten Profilelement formschlüssig verbindbar. Die Verbindung der beiden Profilelemente erfolgt dabei intuitiv durch eine Schnittstelle mit puzzleteilförmigem Vorsprung und passender puzzleteilförmiger Ausnehmung zwischen den Profilelementen.

Zumindest eine erste Durchgangsausnehmung kann in Form einer Bohrung mit kreisförmigem Querschnitt ausgebildet sein.

Der lichte Öffnungsquerschnitt zumindest zweier erster Durchgangsausnehmungen der Kupplung kann sich unterscheiden, um die Anbindung von Verbindern mit unterschiedlichem Querschnitt zu ermöglichen.

Zumindest das erste Profilelement weist mehrere erste Durchgangsausnehmungen zur Anbindung der beiden Doppelprofilträger auf. Die beiden Doppelprofilträger können somit auch lediglich über das erste Profilelement - ohne das zweite Profilelement - miteinander verbunden werden. Zur Übertragung größerer Kräfte kann das erste Profilelement bei Bedarf mit dem zweiten Profilelement ergänzt werden.

Vorzugsweise weisen sowohl das erste Profilelement als auch das zweite Profilelement jeweils mehrere erste Durchgangsausnehmungen zur Anbindung eines ersten Doppelprofilträgers und eines zweiten Doppelprofilträgers auf. Die beiden Profilelemente können dadurch jeweils auch einzeln eingesetzt werden, um einen ersten Doppelprofilträger mit einem zweiten Doppelprofilträger zu verbinden, wenn nur geringe Kräfte zwischen den Doppelprofilträgern wirken.

Das erste Profilelement kann eine zweite Durchgangsausnehmung zur Anbindung eines weiteren Anbauteils an die Kupplung aufweisen. Alternativ oder zusätzlich dazu kann das zweite Profilelement eine entsprechende zweite Durchgangsausnehmung aufweisen. Die Längsachse der zweiten Durchgangsausnehmung erstreckt sich im Wesentlichen senkrecht zur Längsachse der ersten Durchgangsausnehmung. Hierdurch kann das weitere Anbauteil senkrecht zur Längsachse der beiden Doppelprofilträger und senkrecht zu einer gedachten Verbindungsachse zwischen den beiden Trägern der beiden Doppelprofilträger montiert werden. In dieser Richtung weisen die Doppelprofilträger regelmäßig keine Durchgangsausnehmungen zur Ankopplung an ein weiteres Anbauteil auf. Die Längsachse der zweiten Durchgangsausnehmung verläuft dabei bevorzugt senkrecht ±20° zur Längsachse des Doppelprofilträgers im Einbauzustand des ersten Profilelements am Doppelprofilträger.

Ein bevorzugter Kerngedanke der vorliegenden Erfindung besteht somit darin, ein erstes Profilelement bereit zu stellen, das eine Anbindung eines weiteren Anbauteils an einen Doppelprofilträger erlaubt. Die Anbindung erfolgt dabei vorzugsweise im Wesentlichen senkrecht zu den Längsachsen der ersten Durchgangsausnehmungen des ersten Profilelements und senkrecht zur Längsachse des ersten Doppelprofilträgers. Bei Bedarf kann das erste Profilelement über einen Formschluss mit einem zweiten Profilelement ergänzt werden.

Zumindest eine zweite Durchgangsausnehmung kann in Form einer Bohrung mit kreisförmigem Querschnitt ausgebildet sein.

Bevorzugt weist/weisen das erste Profilelement und/oder das zweite Profilelement jeweils mehrere zweite Durchgangsausnehmungen auf.

Der lichte Öffnungsquerschnitt zumindest zweier zweiter Durchgangsausnehmungen der Kupplung kann sich unterscheiden, um die Anbindung von Schraubverbindungen mit unterschiedlichem Querschnitt zu ermöglichen.

Um eine Schraubverbindung leicht an der zweiten Durchgangsausnehmung montieren zu können, kann die Kupplung eine dritte Durchgangsausnehmung mit einer kantenförmigen Innenkontur aufweisen. Hierdurch muss ein Schraubenkopf bzw. eine Mutter der Schraubverbindung beim Lösen bzw. Anziehen der Schraubverbindung nicht gegengehalten werden.

Bevorzugt weist die Kupplung im Bereich jeder zweiten Durchgangsausnehmung jeweils eine zuvor beschriebene dritte Durchgangsausnehmung auf.

Die dritte Durchgangsausnehmung/dritten Durchgangsausnehmungen kann/können in einer Platte, insbesondere in Form eines Blechs, ausgebildet sein, die am Boden des Profilelements befestigt, insbesondere angeschweißt, ist.

Vorzugsweise ist das erste Profilelement in Form eines U-Profils ausgebildet. Alternativ oder zusätzlich dazu kann das zweite Profilelement in Form eines U-Profils ausgebildet sein. Die U-Profilform erweist sich dabei einerseits als statisch besonders tragfähig und andererseits als kostengünstig herstellbar.

Die Kupplung wird mechanisch signifikant verstärkt, wenn das erste Profilelement und/oder das zweite Profilelement einen Steg aufweist/aufweisen, der zwei sich gegenüberliegende Flanken des Profilelements verbindet. Der Steg kann in Form eines zwischen die Flanken geschweißten Blechs ausgebildet sein.

Das erste Profilelement und/oder das zweite Profilelement kann/können einen Anschlag aufweisen, der eine Begrenzung der Schiebebewegung beim Verbinden der Profilelemente darstellt. Einem Benutzer wird durch den Anschlag intuitiv vermittelt, dass sich beide Profilelemente im verbundenen Zustand befinden. Weiterhin wird durch den Anschlag sichergestellt, dass das Zusammenschieben der beiden Profilelemente nicht zu weit erfolgt, sodass der Formschluss nicht wieder gelöst wird.

Besonders bevorzugt ist der Anschlag in Form des Steges ausgebildet. Der Steg erfüllt somit eine Doppelfunktion, nämlich als mechanische Aussteifung der Kupplung und als Stoppelement beim Zusammenschieben der Profilelemente. Der Steg kann hierbei an seinem, vom Boden des Profilelements weg weisenden freien Ende eine Schräge aufweisen, die im Falle der formschlüssig verbundenen Profilelemente an einer weiteren Schräge eines weiteren Steges des anderen Profilelements anliegt.

Das erste Profilelement und/oder das zweite Profilelement kann/können spiegelsymmetrisch zu einer mittigen, senkrecht zur Längsachse des Profilelements verlaufenden Symmetrieebene ausgebildet sein. Ein Benutzer muss dadurch weniger auf die Orientierung der Kupplung bei deren Montage achten.

In besonders bevorzugter Ausgestaltung der Kupplung ist das erste Profilelement identisch zum zweiten Profilelement ausgebildet. Dies vereinfacht signifikant die Montage der Kupplung. Weiterhin müssen weniger verschiedene Bauteile vorgehalten werden, wodurch die Produktion vergünstigt und Lagerkosten eingespart werden können.

Die erfindungsgemäße Aufgabe wird weiterhin gelöst durch eine Trägeranordnung mit einem ersten Doppelprofilträger und einer zuvor beschriebenen Kupplung, wobei der erste Doppelprofilträger durch zumindest einen Verbinder, insbesondere in Form eines Schraubverbinders oder Steckbolzenverbinders, der Trägeranordnung über eine erste Durchgangsausnehmung mit der Kupplung verbunden ist.

Besonders bevorzugt ist die Kupplung zwischen den beiden Trägern des ersten Doppelprofilträgers angeordnet. Hierdurch kann der erste Doppelprofilträger statisch sehr vorteilhaft mit dem zweiten Doppelprofilträger verbunden werden.

Weiter bevorzugt ist die Kupplung zwischen den beiden Trägern des zweiten Doppelprofilträgers angeordnet.

Der erste Doppelprofilträger und/oder der zweite Doppelprofilträger kann/können jeweils zwei identische Träger aufweisen.

Die Trägeranordnung weist bevorzugt einen zweiten Doppelprofilträger auf, der an derselben Kupplung durch einen weiteren Verbinder, insbesondere in Form eines Schraubverbinders oder Steckbolzenverbinders, der Trägeranordnung über eine weitere erste Durchgangsausnehmung mit der Kupplung verbunden ist.

Die zuvor beschriebene Trägeranordnung kann Teil eines Schwerlastfahrzeugs, insbesondere in Form eines Schienenfahrzeugs, vorzugsweise in Form eines Tunnelschalwagens, sein. Die Erfindung betrifft daher auch ein Schwerlastfahrzeug, insbesondere in Form eines Schienenfahrzeugs, vorzugsweise in Form eines Tunnelschalwagens, mit einer zuvor beschriebenen Trägeranordnung.

Die erfindungsgemäße Aufgabe wird weiterhin gelöst durch ein erstes Profilelement einer zuvor beschriebenen Kupplung. Das erste Profilelement ist dabei zur Ausbildung eines zumindest abschnittsweisen Formschlusses mit einem zweiten Profilelement ausgebildet.

Das erste Profilelement kann einen schwalbenschwanzförmigen Vorsprung und/oder eine schwalbenschwanzförmige Ausnehmung zur Aufnahme eines schwalbenschwanzförmigen Vorsprungs aufweisen.

Weitere Merkmale und Vorteile der Erfindung ergeben sich aus der nachfolgenden detaillierten Beschreibung mehrerer Ausführungsbeispiele der Erfindung, aus den Patentansprüchen sowie anhand der Figuren der Zeichnung, die erfindungswesentliche Einzelheiten zeigt. Die verschiedenen Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.

Es zeigen:
- Fig. 1: eine isometrische Ansicht einer Trägeranordnung mit zwei Kupplungen, wobei die Kupplungen jeweils zwei formschlüssig miteinander verbundene Profilelemente aufweist;
- Fig. 2: eine isometrische Ansicht eines ersten Profilelements einer weiteren Kupplung;
- Fig. 3a: eine isometrische Ansicht der weiteren Kupplung mit dem ersten Profilelement gemäß Fig. 2 und einem zweiten Profilelement, wobei die beiden Profilelemente voneinander getrennt sind;
- Fig. 3b: eine Ansicht der Stirnseite der Kupplung gemäß Fig. 3a;
- Fig. 3c: eine isometrische Ansicht der Kupplung gemäß Fig. 3a, wobei die beiden Profilelemente formschlüssig miteinander verbunden sind;
- Fig. 3d: eine Ansicht der Stirnseite der Kupplung gemäß Fig. 3c; und
- Fig. 4: eine Seitenansicht der Trägeranordnung gemäß Fig. 1.

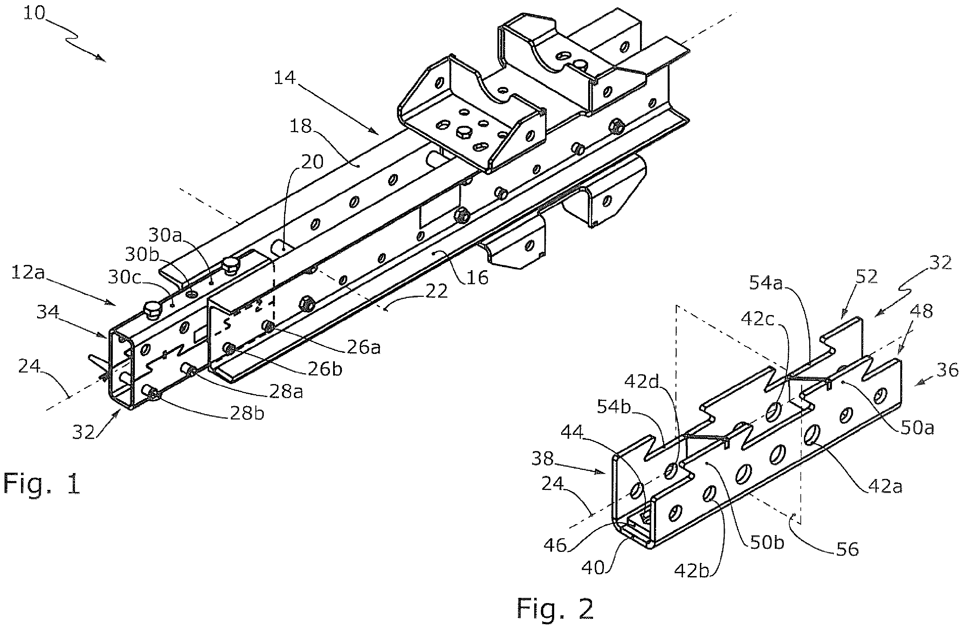

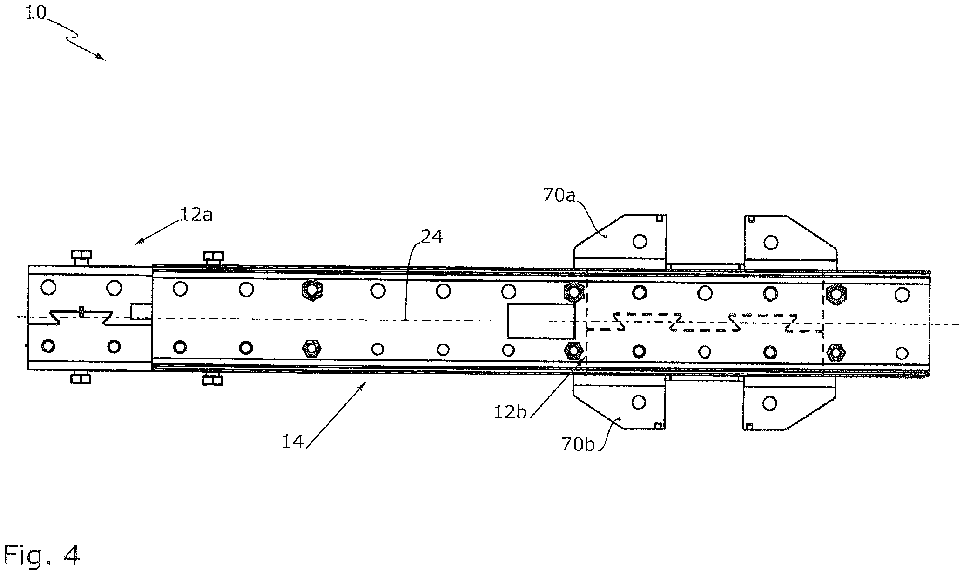

**Fig. 1** zeigt eine Trägeranordnung **10** mit zwei Kupplungen **12a,** 12b (siehe Fig. 4), von denen die Kupplung 12a in Fig. 1 mit einem Bezugszeichen versehen ist und mit der ein erster Doppelprofilträger **14** verbunden ist. Der erste Doppelprofilträger 14 weist einen ersten Träger **16** und einen zweiten Träger **18** auf. Die Träger 16, 18 sind jeweils in Form eines U-Profils ausgebildet.

Die Träger 16, 18 werden durch Verbindungselemente zusammengehalten, von denen aus Gründen der Übersichtlichkeit in Fig. 1 nur ein erstes Verbindungselement **20** mit einem Bezugszeichen versehen ist. Die Längsachse des Verbindungselements 20 erstreckt sich entlang einer gedachten Verbindungsachse **22** der Träger 16, 18. Senkrecht zu dieser gedachten Verbindungsachse 22 und gleichzeitig senkrecht zur Längsachse **24** des ersten Doppelprofilträgers 14 weist der Doppelprofilträger 14 selbst keine Durchgangsausnehmung zur Anbindung eines weiteren Anbauteils auf.

Zwischen den Trägern 16, 18 ist die Kupplung 12a über erste Verbinder **26a, 26b** montiert. Durch zweite Verbinder **28a, 28b** kann ein zweiter Doppelprofilträger (nicht gezeigt) mit der Kupplung 12a verbunden werden, sodass der erste Doppelprofilträger 14 mittelbar über die Kupplung 12a mit dem zweiten Doppelprofilträger verbunden ist. Die Verbinder 26a, 26b, 28a, 28b können in Form von Schraubverbindern oder bevorzugt - wie dargestellt - in Form von Steckbolzen ausgebildet sein.

Die Kupplung 12a weist mehrere zweite Durchgangsausnehmungen auf, von denen in Fig. 1 lediglich die zweiten Durchgangsausnehmungen **30a, 30b, 30c** sichtbar sind. Die Längsachsen (nicht gezeigt) der zweiten Durchgangsausnehmungen 30a, 30b, 30c sind senkrecht ±20° zu den Längsachsen (nicht gezeigt) der Verbinder 26a, 26b, 28a, 28b ausgerichtet. Hierdurch können weitere Anbauteile (siehe auch Fig. 4) - über die Kupplungen 12a, 12b - senkrecht zur gedachten Verbindungsachse 22 des Verbindungselements 20 und senkrecht zur Längsachse 24 des ersten Doppelprofilträgers 14 mittelbar an den ersten Doppelprofilträger 14 angebunden werden. Gleichzeitig dient die Kupplung 12a als Anbindungsmöglichkeit des ersten Doppelprofilträgers 14 an einen zweiten Doppelprofilträger (nicht gezeigt). Der zweite Doppelprofilträger erstreckt sich dabei in Verlängerung des ersten Doppelprofilträgers 14, d. h. in Richtung der Längsachse 24. Die Längsachse 24 des ersten Doppelprofilträgers 14 entspricht dabei auch der Längsachse der Kupplung 12a.

Die Kupplung 12a weist ein erstes Profilelement **32** und ein zweites Profilelement **34** auf. Die Profilelemente 32, 34 sind gleich ausgebildet. Die Längsachse 24 der Kupplung 12a entspricht der Längsachse der Profilelemente 32, 34.

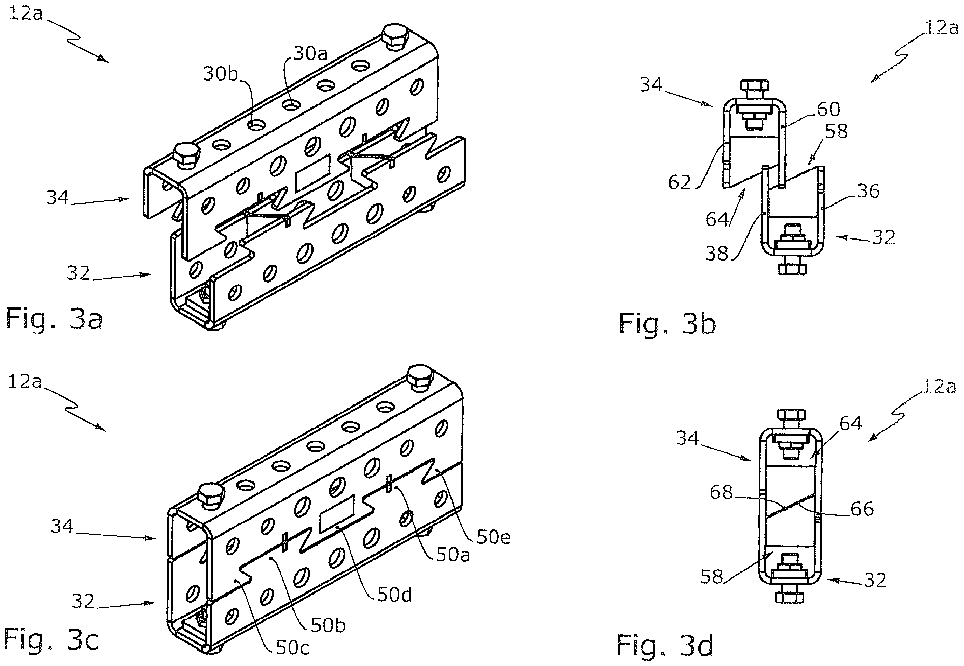

Im in Fig. 1 gezeigten montierten Zustand der Kupplung 12a sind die Profilelemente 32, 34 in Richtung der gedachten Verbindungsachse 22, d. h. parallel zu den Längsachsen der Verbinder 26a, 26b, 28a, 28b, aufgrund der Träger 16, 18 nicht zueinander beweglich. In einer Richtung senkrecht zur gedachten Verbindungsachse 22 und gleichzeitig senkrecht zur Längsachse 24 sind die Profilelemente 32, 34 durch Formschluss aneinander gehalten, wie nachfolgend zu den Fign. 3a bis 3d ausgeführt wird. Im montierten Zustand der Kupplung 12a sind die Profilelemente 32, 34 somit fest miteinander verbunden.

Die Verbindung des ersten Doppelprofilträgers 14 mit einem zweiten Doppelprofilträger (nicht gezeigt) kann - wie in Fig. 1 dargestellt - ausschließlich mittels Verbindern 26a, 26b, 28a, 28b erfolgen, die am ersten Profilelement 32 angeordnet sind. Alternativ oder zusätzlich dazu kann die Verbindung des ersten Doppelprofilträgers 14 mit einem zweiten Doppelprofilträger durch Verbinder erfolgen, die am zweiten Profilelement 34 angeordnet sind. Sind die zwischen dem ersten Doppelprofilträger 14 und dem zweiten Doppelprofilträger zu übertragenden Kräfte eher gering, so kann zur Verbindung des ersten Doppelprofilträgers 14 mit dem zweiten Doppelprofilträger auch nur das erste Profilelement 32 bzw. nur das zweite Profilelement 34 verwendet werden. Anders formuliert kann das erste Profilelement 32 /das zweite Profilelement 34 zur Übertragung großer Kräfte zwischen dem ersten Doppelprofilträger 14 und dem zweiten Doppelprofilträger um das zweite Profilelement 34/das erste Profilelement 32 ergänzt werden. Die Ergänzung kann alternativ oder zusätzlich dazu entsprechend einer gewünschten Anbauteilanbindung (siehe Fig. 4) erfolgen.

Fig. 2 zeigt eine weitere Ausführungsform eines ersten Profilelements 32. Das erste Profilelement 32 weist einen U-förmigen Querschnitt mit einer ersten Flanke **36,** einer zweiten Flanke **38** und einem die Flanken 36, 38 verbindenden Boden **40** auf.

Das erste Profilelement 32 weist an den Flanken 36, 38 mehrere erste Durchgangsausnehmungen auf, von in Fig. 2 aus Gründen der Übersichtlichkeit nur die ersten Durchgangsausnehmungen **42a, 42b, 42c, 42d** mit einem Bezugszeichen versehen sind. Die ersten Durchgangsausnehmungen 42a, 42b in der ersten Flanke 36 fluchten jeweils mit ersten Durchgangsausnehmungen 42c, 42d in der zweiten Flanke 38 zur sicheren Aufnahme von Verbindern (siehe Fig. 1: Verbinder 26a, 26b, 28a, 28b). Um Verbinder mit unterschiedlichem Querschnitt aufnehmen zu können, weisen die ersten Durchgangsausnehmungen 42a, 42c einen anderen Öffnungsquerschnitt auf als die ersten Durchgangsausnehmungen 42b, 42d.

Am Boden 40 sind mehrere in Fig. 2 nicht sichtbare zweite Durchgangsausnehmungen ausgebildet (siehe Fig. 3: zweite Durchgangsausnehmungen 30a, 30b). Die zweiten Durchgangsausnehmungen können jeweils mit einer dritten Durchgangsausnehmung fluchten, von denen in Fig. 2 eine dritte Durchgangsausnehmung **44** mit einem Bezugszeichen versehen ist. Alternativ dazu können aufgrund ihrer Zugänglichkeit nur die stirnseitig des ersten Profilelements 32 zugänglichen zweiten Durchgangsausnehmungen jeweils mit einer dritten Durchgangsausnehmung 44 fluchten. Die dritten Durchgangsausnehmungen 44 sind jeweils in einer Platte ausgebildet, von denen in Fig. 2 eine Platte **46** mit einem Bezugszeichen versehen ist. Die Platte 46 ist auf den Boden 40 des ersten Profilelements 32 geschweißt. Die dritten Durchgangsausnehmungen 44 weisen jeweils einen radial nach innen gerichteten Mehrkant auf und verhindern dadurch ein Durchdrehen eines Schraubenkopfes oder einer Mutter in der jeweiligen dritten Durchgangsausnehmung 44.

Die erste Flanke 36 weist an ihrem dem Boden 40 abgewandten freien Ende **48** zumindest einen Verbindungsvorsprung, hier mehrere Verbindungsvorsprünge **50a, 50b,** auf. Die zweite Flanke 38 weist an ihrem dem Boden 40 abgewandten freien Ende **52** zumindest eine Verbindungsausnehmung, hier mehrere Verbindungsausnehmungen **54a, 54b** auf. Im vorliegenden Fall passen die Verbindungsvorsprünge 50a, 50b in die jeweiligen Verbindungsausnehmungen 54a, 54b.

Das erste Profilelement 32 ist spiegelsymmetrisch zu einer mittigen, sich senkrecht zur Längsachse 24 erstreckenden Symmetrieebene **56** ausgebildet. Hierdurch ist das erste Profilelement 32 vereinfacht fertigbar. **Fig. 3a** zeigt eine weitere Kupplung 12a mit dem ersten Profilelement 32 gemäß Fig. 2 und einem passenden zweiten Profilelement 34. Die Profilelemente 32, 34 sind gleich ausgebildet. Aus Fig. 3a ist ersichtlich, dass das zweite Profilelement 34 mehrere zweite Durchgangsausnehmungen aufweist, von denen aus Gründen der Übersichtlichkeit nur die zweiten Durchgangsausnehmungen 30a, 30b mit einem Bezugszeichen versehen sind. Die zweiten Durchgangsausnehmungen 30a, 30b dienen der Anbindung weiterer Anbauteile (siehe Fig. 4) mittels Schrauben, Steckbolzen oder dergleichen.

**Fig. 3b** zeigt die Kupplung 12a gemäß Fig. 3a, wobei die Profilelemente 32, 34 noch nicht passend zusammengeschoben sind. Aus Fig. 3b ist ersichtlich, dass zwischen den Flanken 36, 38 ein Steg **58** und zwischen den Flanken **60, 62** ein Steg **64** vorgesehen ist. Die Stege 58, 64 versteifen die Verbindung zwischen den Flanken 36, 38 bzw. zwischen den Flanken 60, 62.

**Fig. 3c** zeigt die Kupplung 12a mit verbundenen Profilelementen 32, 34. Fig. 3c verdeutlicht, dass die Verbindungsvorsprünge 50a, 50b des ersten Profilelements 32 Verbindungsvorsprünge 50c, 50d, 50e des zweiten Profilelements 34 hintergreifen und so einen Formschluss zwischen dem ersten Profilelement 32 und dem zweiten Profilelement 34 schaffen.

**Fig. 3d** zeigt die Kupplung 12a gemäß Fig. 3c. Aus Fig. 3d ist ersichtlich, dass die dem zweiten Profilelement 34 zugewandte freie Seite des Stegs 58 eine Schräge **66** aufweist. Analog dazu weist die dem ersten Profilelement 32 zugewandte freie Seite des Stegs 64 eine Schräge **68** auf. Im in Fig. 3d gezeigten formschlüssig verbundenen Zustand der Profilelemente 32, 34 liegt die erste Schräge 66 an der zweiten Schräge 68 an. Hierdurch wird die Kupplung 12a in sich versteift. Aus einem Vergleich der Fign. 3b und 3d wird weiterhin ersichtlich, dass die aufeinander abgestimmten Schrägen 66, 68 jeweils einen Anschlag ausbilden, der ein weiteres Schieben des zweiten Profilelements 34 relativ zum ersten Profilelement 32 über den in Fig. 3d gezeigten Formschluss hinaus verhindert.

**Fig. 4** zeigt die Trägeranordnung 10 gemäß Fig. 1 mit angeschlossenen Kupplungen 12a und **12b** (gestrichelt sichtbar). Wie anhand der Kupplung 12b ersichtlich ist, dienen die Kupplungen 12a, 12b der Anbindung von weiteren Anbauteilen, hier von Konsolen **70a, 70b** senkrecht zur Längsachse 24 des Doppelprofilträgers 14.

Unter Vornahme einer Zusammenschau aller Figuren der Zeichnung betrifft die Erfindung zusammenfassend eine Kupplung 12a, 12b mit zwei formschlüssig miteinander verbindbaren Profilelementen 32, 34. Das erste Profilelement 32 ist vorzugsweise durch ein Verschieben senkrecht zur Längsachse 24 der Kupplung 12a, 12b relativ zum zweiten Profilelement 34 in den Formschluss mit dem zweiten Profilelement 34 bewegbar und in entgegengesetzter Richtung aus dem Formschluss lösbar. Der Formschluss erfolgt bevorzugt durch puzzleförmige Verbindungen bzw. Hintergriffe an freien Enden 48, 52 von einander zugewandten Flanken 36, 38, 60, 62 der Profilelemente 32, 34. Weiter bevorzugt bilden Schrägen 66, 68 an Stegen 58, 64 einen Anschlag, der das Zusammenschieben der Profilelemente 32, 34 nur in eine Richtung bis zum Formschluss der Profilelemente 32, 34, aber nicht darüber hinaus, erlaubt. Eine Kupplung 12a, 12b bietet außerdem die Möglichkeit, weitere Anbauteile über Verbinder, deren Längsachse senkrecht zur Längsachse 24 des Doppelprofilträgers 14 und senkrecht zur Längsachse von Verbindungselementen 20 steht, anzubinden.

## Patentansprüche

1. Kupplung (12a, 12b) zur Verbindung eines ersten Doppelprofilträgers (14) mit einem zweiten Doppelprofilträger und/oder zur Anbindung zumindest eines Anbauteils an den ersten Doppelprofilträger (14) wobei die Kupplung (12a, 12b) Folgendes aufweist:
a) Ein erstes Profilelement (32);
b) Mehrere erste Durchgangsausnehmungen (42a - 42d) am ersten Profilelement (32) zur Anbindung des ersten Doppelprofilträgers (14) und des zweiten Doppelprofilträgers an die Kupplung (12a, 12b);
c) ein zweites Profilelement (34); wobei das erste Profilelement (32) zumindest abschnittsweise formschlüssig mit dem zweiten Profilelement (34) verbindbar ist; dadurch gekennzeichent, dass das erste Profilelement (32) und das zweite Profilelement (34) gleich ausgebildet sind.

2. Kupplung nach Anspruch 1, bei der die Verbindung des ersten Profilelements (32) mit dem zweiten Profilelement (34) durch formschlüssige Hinterschneidungen ausgebildet ist.

3. Kupplung nach Anspruch 2, bei der das erste Profilelement (32) durch eine Schwalbenschwanzverbindung mit dem zweiten Profilelement (34) formschlüssig verbindbar ist.

4. Kupplung nach einem der vorhergehenden Ansprüche, bei der das erste Profilelement (32) und/oder das zweite Profilelement (34) zumindest eine zweite Durchgangsausnehmung (30a - 30c) aufweist/aufweisen, wobei die Längsachse der zweiten Durchgangsausnehmung (30a - 30c) senkrecht ±20° zur Längsachse einer ersten Durchgangsausnehmung (42a - 42d) ausgerichtet ist, um zumindest ein weiteres Anbauteil an die Kupplung (12a, 12b) anbinden zu können.

5. Kupplung nach Anspruch 4, bei der die Kupplung (12a, 12b) am ersten Profilelement (32) und/oder am zweiten Profilelement (34) im Bereich einer zweiten Durchgangsausnehmung (30a - 30c) eine mit der zweiten Durchgangsausnehmung (30a - 30c) fluchtende mehrkantförmige dritte Durchgangsausnehmung (44) zur drehhemmenden Aufnahme eines Schraubenkopfes oder einer Mutter aufweist/aufweisen.

6. Kupplung nach einem der vorhergehenden Ansprüche, bei der das erste Profilelement (32) und/oder das zweite Profilelement (34) in Form eines U-Profils ausgebildet ist/sind.

7. Kupplung nach einem der vorhergehenden Ansprüche, bei der das erste Profilelement (32) und/oder das zweite Profilelement (34) einen Steg (58, 64) aufweist/aufweisen, der zwei sich gegenüberliegende Flanken (36, 38, 60, 62) des Profilelements (32, 34) verbindet.

8. Kupplung nach einem der vorhergehenden Ansprüche, bei der das erste Profilelement (32) und/oder das zweite Profilelement (34) einen Anschlag beim Verschieben des ersten Profilelements (32) relativ zum zweiten Profilelement (34) in dem zumindest abschnittsweisen Formschluss aufweist/aufweisen.

9. Kupplung nach Anspruch 8 in Verbindung mit Anspruch 7, bei der der Anschlag in Form des Steges (58, 64) ausgebildet ist.

10. Kupplung nach einem der vorhergehenden Ansprüche, bei der das erste Profilelement (32) und/oder das zweite Profilelement (34) spiegelsymmetrisch zu einer mittigen, senkrecht zur Längsachse (24) des Profilelements (32, 34) verlaufenden Symmetrieebene (56) ausgebildet ist/sind.

11. Trägeranordnung (10) mit einem ersten Doppelprofilträger (14) und einer Kupplung (12a, 12b) nach einem der vorhergehenden Ansprüche, wobei der erste Doppelprofilträger (14) durch zumindest einen Verbinder (26a, 26b) der Trägeranordnung (10) über eine erste Durchgangsausnehmung (42a - 42d) mit der Kupplung (12a, 12b) verbunden ist.

## Claims

1. Coupling (12a, 12b) for connecting a first double-profile support (14) to a second double-profile support and/or for attaching at least one add-on part to the first double-profile support (14), the coupling (12a, 12b) having the following:
a) a first profile element (32);
b) a plurality of first through-recesses (42a-42d) in the first profile element (32) for attaching the first double-profile support (14) and the second double-profile support to the coupling (12a, 12b);
c) a second profile element (34);
the first profile element (32) being interlockingly connectable to the second profile element (34) at least in portions, **characterized in that** the first profile element (32) and the second profile element (34) are identical.

2. Coupling according to claim 1, wherein the connection of the first profile element (32) to the second profile element (34) is formed by interlocking undercuts.

3. Coupling according to claim 2, wherein the first profile element (32) can be interlockingly connected to the second profile element (34) by means of a dovetail connection.

4. Coupling according to any of the preceding claims, wherein the first profile element (32) and/or the second profile element (34) has/have at least a second through-recess (30a-30c), the longitudinal axis of the second through-recess (30a-30c) being perpendicular ±20° to the longitudinal axis of a first through-recess (42a-42d) in order to be able to attach a further add-on part to the coupling (12a, 12b).

5. Coupling according to claim 4, wherein the coupling (12a, 12b) has/have, in the first profile element (32) and/or in the second profile element (34) in the region of a second through-recess (30a-30c), a polygonal, third through-recess (44) for non-rotatably receiving a screw head or a nut, which third through-recess is flush with the second through-recess (30a-30c).

6. Coupling according to any of the preceding claims, wherein the first profile element (32) and/or the second profile element (34) is/are in the shape of a U-profile.

7. Coupling according to any of the preceding claims, wherein the first profile element (32) and/or the second profile element (34) has/have a connecting portion (58, 64) that connects two opposite flanks (36, 38, 60, 62) of the profile element (32, 34).

8. Coupling according to any of the preceding claims, wherein the first profile element (32) and/or the second profile element (34) has/have a stop when the first profile element (32) is shifted relative to the second profile element (34) in the interlocking connection that is present at least in portions.

9. Coupling according to claim 8 in conjunction with claim 7, wherein the stop is in the form of the connecting portion (58, 64).

10. Coupling according to any of the preceding claims, wherein the first profile element (32) and/or the second profile element (34) is/are mirror-symmetric with respect to a central plane of symmetry (56) that extends perpendicularly to the longitudinal axis (24) of the profile element (32, 34).

11. Support arrangement (10) comprising a first double-profile support (14) and a coupling (12a, 12b) according to any of the preceding claims, wherein the first double-profile support (14) is connected to the coupling (12a, 12b) by means of at least one connector (26a, 26b) of the support arrangement (10) via a first through-recess (42a-42d).

## Revendications

1. Accouplement (12a, 12b) destiné à relier un premier support à deux profilés (14) à un deuxième support à deux profilés et/ou rattacher au moins un élément à rapporter au premier support à deux profilés (14), l'accouplement (12a, 12b) comprenant les éléments suivants :
a) un premier élément profilé (32) ;
b) une pluralité de premiers évidements traversants (42a à 42d) ménagés au niveau du premier élément profilé (32) pour rattacher le premier support à deux profilés (14) et le deuxième support à deux profilés à l'accouplement (12a, 12b) ;
c) un deuxième élément profilé (34) ;
le premier élément profilé (32) pouvant être relié au moins en partie par complémentarité de formes au deuxième élément profilé (34) ; **caractérisé en ce que** le premier élément profilé (32) et le deuxième élément profilé (34) sont de conception identique.

2. Accouplement selon la revendication 1, la liaison du premier élément profilé (32) au deuxième élément profilé (34) étant formée par des contre-dépouilles à complémentarité de formes.

3. Accouplement selon la revendication 2, le premier élément profilé (32) pouvant être relié par complémentarité de formes au deuxième élément profilé (34) au moyen d'une liaison à queue d'aronde.

4. Accouplement selon l'une des revendications précédentes, le premier élément profilé (32) et/ou le deuxième élément profilé (34) comportant au moins un deuxième évidement traversant (30a à 30c), l'axe longitudinal du deuxième évidement traversant (30a à 30c) étant orienté perpendiculairement à ±20° par rapport à l'axe longitudinal d'un premier évidement traversant (42a à 42d) pour pouvoir rattacher au moins un autre élément à rapporter à l'accouplement (12a, 12b).

5. Accouplement selon la revendication 4, l'accouplement (12a, 12b) comportant, au niveau du premier élément profilé (32) et/ou au niveau du deuxième élément profilé (34), dans la région d'un deuxième évidement traversant (30a à 30c), un troisième évidement traversant (44) à plusieurs pans aligné avec le deuxième évidement traversant (30a à 30c) et destiné à recevoir une tête de vis ou un écrou de manière verrouillée en rotation.

6. Accouplement selon l'une des revendications précédentes, le premier élément profilé (32) et/ou le deuxième élément profilé (34) étant conçus sous la forme d'un profilé en U.

7. Accouplement selon l'une des revendications précédentes, le premier élément profilé (32) et/ou le deuxième élément profilé (34) comportant une nervure (58, 64) qui relie deux flancs opposés (36, 38, 60, 62) de l'élément profilé (32, 34).

8. Accouplement selon l'une des revendications précédentes, le premier élément profilé (32) et/ou le deuxième élément profilé (34) comportant dans la liaison au moins en partie à complémentarité de formes une butée lors du coulissement du premier élément profilé (32) par rapport au deuxième élément profilé (34).

9. Accouplement selon la revendication 8 en liaison avec la revendication 7, la butée étant conçue sous la forme de la nervure (58, 64).

10. Accouplement selon l'une des revendications précédentes, le premier élément profilé (32) et/ou le deuxième élément profilé (34) étant à symétrie spéculaire par rapport à un plan de symétrie central (56) s'étendant perpendiculairement à l'axe longitudinal (24) de l'élément profilé (32, 34).

11. Ensemble de supports (10) comprenant un premier support à deux profilés (14) et un accouplement (12a, 12b) selon l'une des revendications précédentes, le premier support à deux profilés (14) étant relié à l'accouplement (12a, 12b) par au moins un élément de liaison (26a, 26b) de l'ensemble de supports (10) par le biais d'un premier évidement traversant (42a à 42d).
